# FASCICULE DE BREVET EUROPEEN

(11) **EP 1 513 420 B1**
(45) Date de publication et mention de la délivrance du brevet: **28.12.2005**
(21) Numéro de dépôt: 03755194.2
(22) Date de dépôt: 23.05.2003
(51) Int. Cl.: A23L 2/04, A23L 2/02

(54) **PROCEDE D'OBTENTION DE PRODUITS DERIVES DE BANANES, NOTAMMENT DE LIQUEFACTION DELA BANANE EN VUE D'OBTENIR UN PUR-JUS**
VERFAHREN ZUM ERHALT VON VON BANANEN ABGELEITETEN PRODUKTEN, INSBESONDERE ZUM VERFLÜSSIGEN VON BANANEN ZUM ERHALT VON REINEM SAFT
METHOD FOR OBTAINING BANANA-DERIVED PRODUCTS, IN PARTICULAR FOR LIQUEFYING BANANA TO OBTAIN PURE JUICE

(30) Priorité: 24.05.2002 FR 0206545
(43) Date de publication de la demande: 16.03.2005
(73) Titulaire: INSTITUT NATIONAL DE LA RECHERCHE AGRONOMIQUE (INRA), 75338 Paris Cédex 07 (FR); Minatchy, Nathalie, 97130 Capesterre Belle Eau (FR)
(72) Inventeur: MINATCHY, Nathalie, F-97130 Capesterre Belle Eau (FR); ESCUDIER, Jean-Louis, F-11110 ARMISSAN (FR); MIKOLAJCZAK, Michel, F-11430 GRUISSAN (FR)
(74) Mandataire: Rhein, Alain
(86) Numéro de dépôt international: PCT/FR2003/001568
(87) Numéro de publication internationale: WO 2003/099043

(56) Documents cités:
- FR-A- 2 638 064
- US-A- 4 721 627
- US-A- 4 874 617
- US-A- 4 921 709

## Description

La présente invention concerne un procédé d'obtention de produits dérivés de bananes, notamment de liquéfaction de la banane en vue d'obtenir un pur-jus.

A l'heure actuelle, les procédés utilisés pour transformer les bananes ne permettent pas d'obtenir des jus 100% bananes sans addition d'eau ni de sucre, mais uniquement des nectars constitués principalement de purée de pulpe de bananes, d'eau et de sucre.

Ces boissons sont obtenues après épluchage des bananes, généralement en soumettant la pulpe à un traitement thermique, suivi d'une mise sous vide brutale, complété éventuellement d'une réaction enzymatique et d'un pressurage permettant d'obtenir une fraction liquide et un résidu sec constitué par les fibres de la banane.

Ainsi, le brevet FR 2 638 333, tout particulièrement, décrit un procédé d'extraction de jus et d'arômes à partir de substrats végétaux tels que notamment des fruits, dans lequel la matière première est d'abord chauffée puis refroidie rapidement, de préférence par condensation sous vide.

Cette mise sous vide rapide permet de déstructurer la matière première en entraînant un écoulement gravitaire du jus en phase liquide, tout en provoquant la vaporisation d'une partie de la phase aqueuse du substrat dans laquelle est contenu l'essentiel des composés aromatiques, pouvant être rajoutés, le cas échéant, au jus d'écoulement, après condensation.

Une amélioration de ce procédé est en outre décrite dans le document EP 0 727 948 du même titulaire, qui se rapporte à un dispositif permettant de réaliser la phase de chauffage à l'aide de vapeurs issues de la matière première elle-même et non issue d'eau exogène, de sorte à ne pas diluer les produits et d'éviter des étapes supplémentaires de concentration.
On connaît par ailleurs du document US 4 874 617 un procédé permettant de produire des essences de bananes ainsi que des dérivés liquides désaromatisés.

Dans ce document, il est prévu de traiter la pulpe et le parenchyme des bananes par chauffage à la vapeur, de soumettre le mélange à une pression réduite, puis de réaliser une hydrolyse enzymatique pour aboutir finalement à une fraction liquide et une fraction solide.

La fraction liquide est ensuite soumise au vide et à une évaporation des composés volatils, pour obtenir l'essence de bananes escomptée.

En fait, le succès des boissons à base de bananes, du type nectar, disponibles par le biais des procédés actuels, est cependant grandement limité auprès des consommateurs qui n'apprécient guère leur consistance épaisse, et leur manque de caractère désaltérant.

Par ailleurs, la transformation des bananes en boissons ou produits alimentaires présentant un goût et un aspect de qualité est particulièrement délicate, en particulier du fait de la fragilité du fruit.

En effet, au contact de l'air, les bananes sont rapidement sujettes à un brunissement peu appétissant suite à l'oxydation des polyphénols qu'elles contiennent, en composés bruns, sous l'action des enzymes polyphénol oxydases, libérées après épluchage ou blessure du fruit et entrant alors en contact avec leur substrat.

Afin d'éviter cet inconvénient, il faut donc impérativement transformer des fruits intacts et travailler dans une atmosphère dépourvue d'oxygène.

En outre, afin d'augmenter les cadences et les rendements, les procédés classiques supposent généralement de peler les bananes mécaniquement, à l'aide de machines qui raclent une partie de la peau pour récupérer le maximum de pulpe.

Ceci occasionne non seulement des goûts astringents et peu plaisants dans les produits finis, mais donne lieu en plus à une purée de pulpe excessivement sensible au brunissement, et donc beaucoup plus difficile à traiter.

Par ailleurs, les procédés de modification d'atmosphère utilisés pour éviter le contact avec l'oxygène ne donnent pas de résultats satisfaisants tant du point de vue de la qualité des produits finis que de leur facilité d'application industrielle.

La présente invention se propose par conséquent d'apporter une solution à ces différents inconvénients grâce à un procédé de transformation des bananes permettant d'aboutir à des produits riches en goûts, présentant une qualité nutritionnelle élevée, avec un haut rendement et mettant en oeuvre des moyens peu complexes.

Ainsi, la présente invention concerne un procédé d'obtention de produits dérivés de bananes, notamment de liquéfaction de la banane en vue d'obtenir un pur-jus, dans lequel :
- l'on épluche les bananes, en veillant à séparer la pulpe de la peau tout en préservant l'intégrité des fruits,
- l'on chauffe la pulpe à la vapeur et à l'abri de l'oxygène, de sorte à permettre le blanchiment des fruits et l'obtention d'un jus d'exsudation,
- on refroidit la pulpe,
- on réduit la pulpe en purée,
- l'on soumet la purée de pulpe de bananes à une réaction d'hydrolyse enzymatique, puis on la presse pour en extraire le jus,
caractérisé en ce que :
- l'on soumet une partie au moins du jus d'exsudation à une pression réduite de sorte à le refroidir et en extraire une fraction de composés aromatiques par auto évaporation puis condensation de l'eau et des arômes qu'il contient, et
- l'on réunit le jus issu du pressage de la pulpe, la fraction de composés aromatiques et le jus d'exsudation refroidi pour obtenir ledit pur-jus de bananes.

Selon une caractéristique additionnelle du procédé selon l'invention, le refroidissement et la réduction en purée de la pulpe sont obtenus par passage dans un échangeur.

Selon une variante du procédé selon l'invention, le refroidissement et la réduction en purée de la pulpe sont obtenus par son placement brutal sous pression réduite, en sorte de réaliser une première extraction de fractions aromatiques.

Selon une autre caractéristique particulièrement avantageuse du procédé selon l'invention, l'on utilise, pour le chauffage de la pulpe de bananes, la vapeur issue d'une partie au moins du jus d'exsudation produit par ladite pulpe.

Selon une autre caractéristique dudit procédé, l'on réalise le chauffage de la pulpe de bananes dans une enceinte saturée en vapeur, pendant une durée comprise entre 3 et 15 min.

Dans une forme de mise en oeuvre du procédé selon l'invention, l'on soumet également de façon brutale les peaux de bananes après chauffage à une pression réduite de sorte à en extraire une autre fraction de composés aux arômes spécifiques par auto évaporation puis condensation de l'eau qu'elles contiennent.

Dans cette forme de mise en oeuvre, le procédé se caractérise encore en ce que l'on rajoute cette fraction de composés aromatiques au jus de bananes obtenu en réunissant le jus issu du pressage de la pulpe, la ou les fractions de composés aromatiques et le jus d'exsudation concentré.

Selon une autre caractéristique du procédé selon l'invention, afin d'extraire les composés aromatiques, l'on soumet la pulpe de bananes, le jus d'exsudation et/ou les peaux de bananes à une pression comprise entre 30 et 500 mbars, préférentiellement entre 50 et 200 mbars.

Par ailleurs, selon une caractéristique additionnelle, l'on réalise la condensation des composés aromatiques sous une température de l'ordre de 0°C.

Selon une autre caractéristique, l'on utilise pour la réaction d'hydrolyse enzymatique, des enzymes avec des activités pectinase et hémicellulase.

Selon une autre caractéristique additionnelle du procédé selon l'invention, on rajoute de l'acide ascorbique au jus de bananes obtenu, afin d'éviter le brunissement de ce dernier au contact avec l'oxygène.

En outre, selon une possibilité de mise en oeuvre, le procédé selon l'invention se caractérise également en ce que l'on condense l'excès de vapeur utilisée pour chauffer la pulpe de bananes, afin de recueillir les composés aromatiques qu'elle renferme et la rajouter au jus de bananes produit.

La présente invention sera, à présent, mieux comprise à la lecture de la description qui va suivre, se rapportant à des exemples de réalisation, donnés à titre indicatif et non limitatif.

La présente invention concerne un procédé permettant de transformer des bananes en produits alimentaires divers, et en particulier en pur jus.

Cette invention a pour objet de permettre l'obtention de jus de bananes présentant les caractéristiques de la matière première d'origine, à la fois en termes de couleur, odeur, saveur, et valeur nutritionnelle, de sorte à élargir le succès commercial de ce type de produits.

En outre, ce procédé prévoit la mise en oeuvre de moyens peu complexes permettant un gain de temps et de matière afin d'améliorer les rendements.

La première phase importante du présent procédé concerne l'épluchage des fruits, choisis de préférence mûrs et tigrés avec un stade colorimétrique de niveau 7 au moins, afin d'optimiser les qualités organoleptiques des produits.

Les bananes sont en fait épluchées une à une, manuellement, et avec précaution, afin de préserver l'intégrité du fruit et éviter des blessures susceptibles d'entraîner un brunissement intempestif.

Une fois pelées, les pulpes peuvent, bien entendu, être conservées, si nécessaire, dans une atmosphère exempte d'oxygène, par exemple dans des bacs saturés en gaz carbonique, ou subir les autres étapes du procédé de transformation directement.

La transformation proprement dite consiste à chauffer ensuite les pulpes entières à la vapeur, toujours à l'abri d'oxygène, dans une chambre de chauffe saturée en vapeur.

Ceci permet à la fois de blanchir les pulpes de bananes en dénaturant les enzymes polyphénols oxydases responsables du brunissement enzymatique des polyphénols, et d'obtenir un jus d'exsudation correspondant à une fraction liquide suintant desdites pulpes chauffées, et pouvant être réutilisée dans la suite de la chaîne de transformation.

La durée du chauffage est en outre réglable, ce qui permet de contrôler le traitement thermique subi par la matière première.

Ainsi, le chauffage s'effectue en appliquant de préférence une température de 90 à 95 °C à coeur des fruits par tout moyen approprié, pendant 3 à 15 min.

Cependant, de sorte à préserver au maximum les arômes propres aux bananes et à ne pas diluer le jus, le présent procédé prévoit avantageusement d'utiliser comme moyen préférentiel la vapeur issue du jus d'exsudation des pulpes au cours de cette même phase de chauffage.

Ainsi, ledit chauffage peut, par exemple démarrer à l'aide de vapeur d'eau introduite dans la chambre de chauffe, puis être poursuivi, dès que possible, par de la vapeur issue des exsudats, dont une partie au moins est vaporisée.

On évite de cette façon d'utiliser de l'eau exogène ne faisant pas partie de la matière première, et qui pourrait diluer les produits finaux escomptés.

Le procédé selon l'invention prévoit de transférer ensuite la matière chauffée depuis la chambre de chauffe jusqu'à une chambre de détente, grâce à une pompe volumétrique avec un manchon étanche pour éviter les fuites de vapeur et une casse du vide.

La pulpe de bananes préalablement chauffée est mise sous vide immédiatement, ce qui provoque une auto-évaporation d'une partie de l'eau contenue dans la matière et le refroidissement instantané de la pulpe.

La vapeur d'eau entraîne avec elle une première fraction de composés aromatiques, passe ensuite dans un condenseur et est finalement récupérée sous forme de condensats aromatiques.

La chambre de détente utilisée dans le procédé selon l'invention est, en fait, reliée à un dispositif de vide par l'intermédiaire d'un condenseur refroidi par un fluide frigorigène.

La nature des eaux aromatiques obtenue est fonction de la valeur de la pression de travail et de la température de condensation.

Ainsi, un travail à pression très réduite permet une bonne extraction des composés volatils, mais leur température de condensation est également abaissée.

Ces composés ne sont récupérés dans les eaux aromatiques que si le condenseur se trouve à une température suffisamment basse pour les retenir.

Dans le cas contraire, ils sont aspirés par la pompe à vide et perdus dans l'atmosphère.

La pression de travail est la résultante d'un compromis entre la capacité d'extraction et la capacité de condensation.

Industriellement, un vide de 30 à 500 mbars (préférentiellement 50 à 200 mbars) peut être appliqué en fonction des caractéristiques du produit que l'on désire obtenir.

Cette opération de mise sous vide permet donc de transformer des bananes tout en les protégeant du contact avec l'oxygène.

Par ailleurs, elle a également pour effet de désaérer la purée de pulpe de bananes, et, par conséquent, d'enlever les éventuelles traces d'oxygène dissous.

Ce traitement court sur fruits entiers permet, par conséquent, de manière très avantageuse, de se prémunir contre tout brunissement, qu'il soit enzymatique ou non enzymatique.

En outre, au cours de cette phase l'on réalise simultanément le chauffage, le broyage des bananes et le refroidissement de la purée de pulpe, ce qui autorise un gain de temps non négligeable.

Il est également envisageable de remplacer cette opération de mise sous vide par un refroidissement sur un échangeur de température de préférence à surface raclée, mais dans ce cas, les fractions aromatiques ne sont pas extraites.

La vapeur qui s'échappe de la chambre de chauffe peut également être récupérée et envoyée sur un condenseur afin de récupérer des composés volatils éventuellement entraînés par cette vapeur.

Selon le présent procédé, la purée de pulpes de bananes obtenue après mise sous vide ou refroidissement sur un échangeur est ensuite transférée dans une cuve pour y subir une hydrolyse enzymatique.

Les enzymes concernées ont des activités pectinases et hémicellulases et sont disponibles dans le commerce.

Bien entendu, tous les types d'enzymes permettant d'obtenir un résultat identique pourront également convenir pour la mise en oeuvre du présent procédé.

Cette hydrolyse permet de fragiliser les cellules et de faciliter l'extraction du jus.

Ainsi, les rendements sont améliorés et le jus présente une viscosité moins élevée.

Par ailleurs, la paroi des cellules végétales a également été fragilisée à cause de l'évaporation brutale de l'eau lors de la mise sous vide, ce qui contribue également à une meilleure extraction du jus.

Après hydrolyse enzymatique, la purée est enfin pressée par tout moyen approprié, tel que, par exemple, une presse à paquets.

Cet appareillage permet, de par le pressurage en couche mince, d'atteindre des rendements en jus conséquents (ils peuvent atteindre 80 % du poids de la purée), cependant les besoins en main d'oeuvre et en manutention sont importants.

Par conséquent, au niveau industriel, il serait certainement préférable de se tourner vers des outils plus mécanisés quitte à avoir des rendements moindres.

Selon le présent procédé, afin de préserver au maximum l'ensemble des arômes contenus dans la matière première initiale, il est prévu de soumettre également le jus d'exsudation issu du chauffage à une mise sous vide pour le refroidir instantanément, ce qui provoque une évaporation d'une partie des composés volatils qui sont condensés et qui constituent une deuxième fraction de composés aromatiques solubles dans l'eau.

A ce niveau des étapes du procédé, l'on dispose donc de plusieurs fractions dérivées des bananes d'origine, à savoir le jus obtenu après la phase de pressage de la purée de pulpe, la première fraction de condensats aromatiques issus de la mise sous vide de ladite pulpe, la deuxième fraction de composés aromatiques provenant des exsudats et le jus d'exsudation refroidi.

Afin d'obtenir un jus de bananes aux qualités gustatives escomptées, le présent procédé prévoit de réunir l'ensemble de ces différentes fractions, ce qui donne avantageusement lieu à un produit dans lequel l'on récupère la plupart des éléments nutritifs et des composés aromatiques, avec un rendement voisin de 80 % par rapport aux bananes pelées, les 20 % de perte étant essentiellement constitués de fibres non digérées par le traitement enzymatique.

Ces dernières peuvent cependant être utilisés comme aliment de charge après broyage, notamment dans des produits diététiques, ou en alimentation animale, ce qui permet d'obtenir un rendement voisin de 100%.

Une autre mise en oeuvre du procédé selon l'invention suppose en outre de récupérer également les arômes des peaux de banane qui ont des notes spécifiques et qui peuvent avoir des applications technologiques particulières.

A cet effet, après un passage par la chambre de chauffe desdites peaux de bananes permettant de les laver par la condensation de la vapeur et donc d'enlever les résidus de produits phytosanitaires utilisés en agriculture, l'on soumet également ces dernières à une pression réduite de sorte à en extraire une troisième fraction de composés aux arômes spécifiques par auto évaporation puis condensation de l'eau qu'elles contiennent.

Les résidus de peaux peuvent faire l'objet, après broyage, d'une éventuelle utilisation dans l'alimentation animale.

Il est également envisageable de récupérer la vapeur qui s'échappe de la chambre de chauffe afin de l'envoyer sur un condenseur pour en extraire les composés aromatiques volatils qu'elle contient, afin de la rajouter au jus de bananes produit.

Selon une autre caractéristique du présent procédé, l'on rajoute de l'acide ascorbique au produit final recueilli afin de le protéger au maximum du contact avec l'oxygène.

Le procédé de l'invention permet par conséquent d'obtenir des jus 100% banane clairs ou pulpeux, stables, sans addition d'eau ou de sucres. Ces jus présentent donc une qualité nutritionnelle plus élevée que celle des nectars de banane ainsi qu'un goût et un arôme banane très prononcé.

Des analyses comparatives de la composition des bananes fraîches et du jus obtenu par le procédé de l'invention ont été réalisées.

Les compositions des deux produits sont fournies dans le tableau en annexe, et qui représente la comparaison de la valeur nutritionnelle des bananes fraîches et du jus de bananes produit.

Ainsi, on voit que le profil nutritionnel des bananes fraîches est globalement respecté dans le jus de bananes produit par le biais du procédé selon l'invention.

En ce qui concerne les vitamines qui sont présentes en très faibles quantités, les rendements sont plus difficiles à établir compte tenu de la sensibilité des appareils de dosage.

Par ailleurs, bien que le présent procédé ait été plus particulièrement décrit dans le cadre de la production de jus de bananes, il est tout à fait envisageable d'élaborer d'autres produits ou d'utiliser les différentes fractions obtenues dans d'autres applications.

Ainsi, la purée de pulpe de bananes obtenue par le présent procédé peut être utilisée non seulement pour fabriquer des jus, mais également des confitures, pâtes de fruit et autres confiseries, ou encore des produits pour l'alimentation infantile, des pétillants, des vinaigres.

Les condensats aromatiques quant à eux, peuvent être congelés ou concentrés en fonction de l'utilisation qu'on souhaite en faire.

Ils reflètent bien la subtilité de l'arôme naturel de la banane fraîche, contrairement aux arômes synthétiques disponibles sur le marché qui ne présentent qu'une seule note aromatique.

Ils peuvent être utilisés en l'état pour l'aromatisation de boissons sans alcool ou pour la fabrication d'arômes naturels de banane après concentration par tout moyen approprié.

Il est également possible de produire un jus pulpeux en rajoutant dans le jus de bananes final de la pulpe de banane (préalablement mise de côté après le passage de l'étape de mise sous vide et raffinée sous atmosphère modifiée afin d'enlever les graines).

Pour des raisons gustatives, du jus de citron peut être ajouté, et l'ensemble est ensuite passé dans un homogénéisateur haute pression pour éclater les petites particules de pulpe de banane et les mettre en suspension.

Ce jus est ensuite stabilisé microbiologiquement et conditionné.

Une pasteurisation à 80 °C pendant 20 minutes peut être avantageusement utilisée.

Il est évident que l'utilisation de procédés HTST (High Température Short Time) ne pourra qu'être bénéfique sur les qualités organoleptiques des produits.

Pour l'obtention de jus clairs, le produit de liquéfaction doit être clarifié par tout moyen approprié. Ce jus est riche en protéines et en pectines. Pour le clarifier, il faut dénaturer les protéines et les faire précipiter. Une méthode de clarification peut être la suivante : le jus est chauffé à une température suffisante pour dénaturer les protéines puis il est centrifugé. Les protéines dénaturées par la chaleur vont précipiter en entraînant avec elles les pectines. Les techniques de filtration tangentielle (microfiltration, ultrafiltration) peuvent être utilisées pour redonner du brillant au jus. La microfiltration sur membrane de 0,2 µm a été avantageusement utilisée dans notre cas. Les jus sont ensuite stabilisés microbiologiquement, comme les jus pulpeux, et conditionnés.

Enfin on peut encore envisager la production de jus gazéifiés, car les jus clairs sont des produits très sucrés qui peuvent paraître lourds et non désaltérants.

La gazéification amène de la légèreté et permet de conserver le caractère 100% banane.

Elle est réalisée sur le jus lui-même à façon, en rajoutant, par exemple, une dose de dioxyde de carbone de 2 à 3 g/l, ce qui permet d'apporter de la légèreté au produit et de modifier ses caractéristiques organoleptiques de manière tout à fait plaisante.

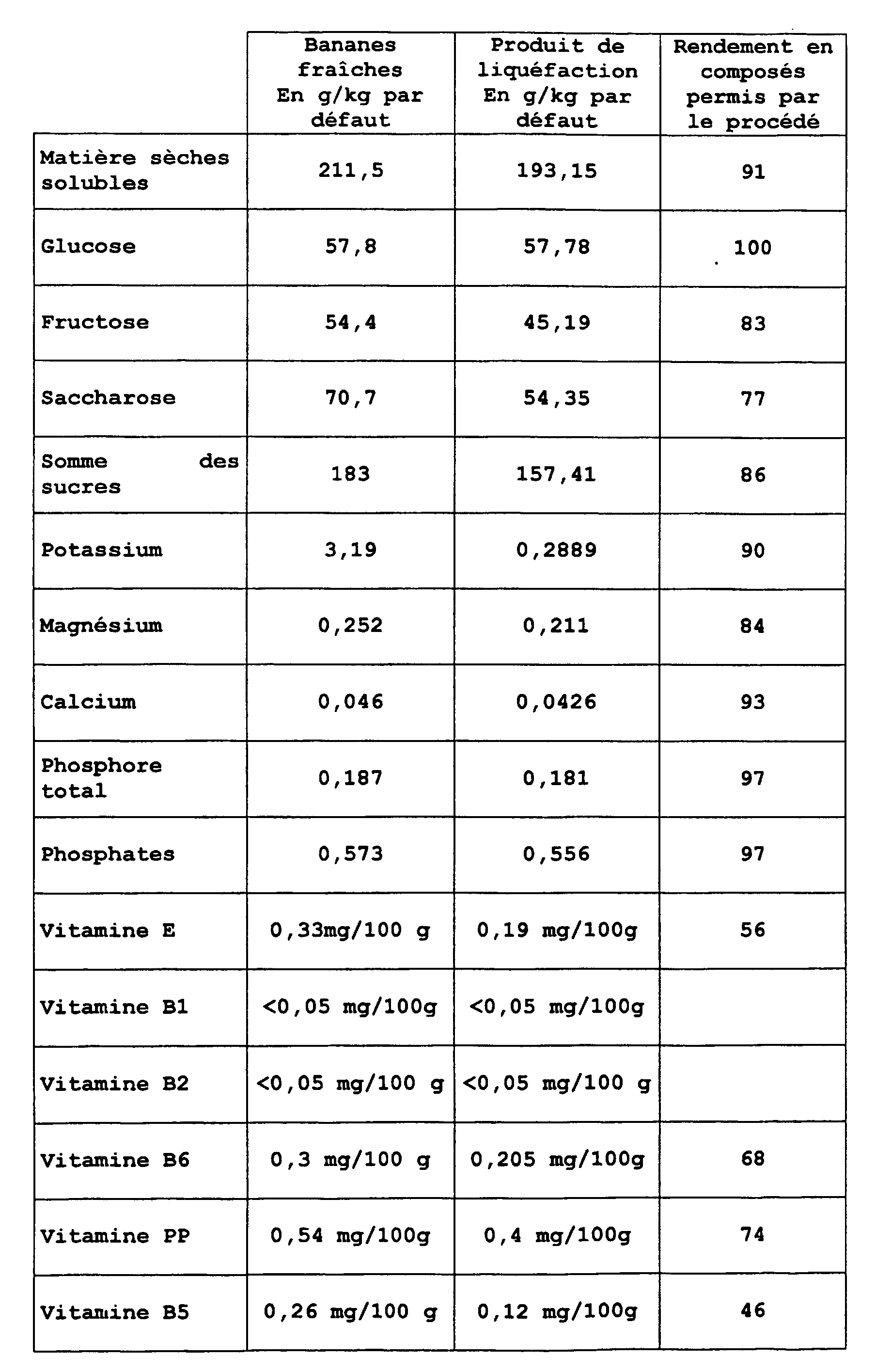

## Revendications

1. Procédé d'obtention de produits dérivés de bananes, notamment de liquéfaction de la banane en vue d'obtenir un pur-jus, dans lequel :
- l'on épluche les bananes, en veillant à séparer la pulpe de la peau tout en préservant l'intégrité des fruits,
- l'on chauffe la pulpe à la vapeur et à l'abri de l'oxygène, de sorte à permettre le blanchiment des fruits et l'obtention d'un jus d'exsudation,
- on refroidit la pulpe,
- on réduit la pulpe en purée,
- l'on soumet la purée de pulpe de bananes à une réaction d'hydrolyse enzymatique, puis on la presse pour en extraire le jus,
**caractérisé en ce que** :
- l'on soumet une partie au moins du jus d'exsudation à une pression réduite de sorte à le refroidir et en extraire une fraction de composés aromatiques par auto évaporation puis condensation de l'eau et des arômes qu'il contient, et
- l'on réunit le jus issu du pressage de la pulpe, la fraction de composés aromatiques et le jus d'exsudation refroidi pour obtenir ledit pur-jus de bananes.

2. Procédé selon la revendication 1, **caractérisé en ce que** le refroidissement et la réduction en purée de la pulpe sont obtenus par passage dans un échangeur.

3. Procédé selon la revendication 1, **caractérisé en ce que** le refroidissement et la réduction en purée de la pulpe sont obtenus par son placement brutal sous pression réduite, en sorte de réaliser une première extraction de fractions aromatiques.

4. Procédé selon l'une quelconque des revendications précédentes, **caractérisé en ce que** l'on utilise, pour le chauffage de la pulpe de bananes, la vapeur issue d'une partie au moins du jus d'exsudation produit par la pulpe.

5. Procédé selon l'une quelconque des revendications précédentes, **caractérisé en ce que** l'on réalise le chauffage de la pulpe de bananes dans une enceinte saturée en vapeur, jusqu'à obtenir une température de 90 à 95 °C à coeur des fruits pendant une durée comprise entre 3 et 15 min.

6. Procédé selon l'une quelconque des revendications précédentes, **caractérisé en ce que** l'on soumet brutalement les peaux de bananes après chauffage à une pression réduite de sorte à en extraire une autre fraction de composés aux arômes spécifiques par auto évaporation puis condensation de l'eau et des arômes qu'elles contiennent.

7. Procédé selon l'une quelconque des revendications précédentes, **caractérisé en ce qu'**afin d'extraire les composés aromatiques, l'on soumet la pulpe de bananes, le jus d'exsudation et/ou les peaux de bananes à une pression comprise entre 30 et 500 mbars, préférentiellement 50 et 200 mbars.

8. Procédé selon l'une quelconque des revendications précédentes, **caractérisé en ce que** l'on réalise la condensation des composés aromatiques sous une température de l'ordre de 0°C

9. Procédé selon l'une quelconque des revendications précédentes, **caractérisé en ce que** l'on utilise pour la réaction d'hydrolyse enzymatique, des enzymes à activités pectinases et des hémicellulases.

10. Procédé selon l'une quelconque des revendications précédentes, **caractérisé en ce que** l'on rajoute de l'acide ascorbique au jus de bananes obtenu, afin d'éviter le brunissement de ce dernier au contact avec l'oxygène.

11. Procédé selon l'une quelconque des revendications précédentes, **caractérisé en ce que** l'on condense la vapeur utilisée pour chauffer la pulpe de bananes, afin de recueillir les composés aromatiques qu'elle renferme et la rajouter au jus de bananes produit.

## Patentansprüche

1. Verfahren zur Erhaltung von von Bananen abgeleiteten Produkten, insbesondere zum Verflüssigen von Bananen, um einen reinen Saft zu erhalten, bei dem :
- die Bananen geschält werden, wobei darauf geachtet wird, daß das Fruchtfleisch von der Haut getrennt wird, während die Integrität der Früchte erhalten bleibt,
- das Fruchtfleisch durch Dampf und unter Sauerstoffabschluß erhitzt wird, derart, um das Blanchieren der Früchte und die Erhaltung eines Tropfsaftes zu erlauben,
- das Fruchtfleisch abgekühlt wird,
- das Fruchtfleisch zum Püree zerkleinert wird,
- das Bananenfruchtfleischpüree einer enzymatischen Hydrolysereaktion unterzogen wird, dann gepreßt wird, um den Saft auszuziehen,
**dadurch gekennzeichnet, daß**
- wenigstens ein Teil des Tropfsaftes einem geringen Druck unterzogen wird, derart, um ihn abzukühlen und eine Fraktion aromatischer Komponenten durch Eigenverdunstung, dann Kondensation des Wassers und der Aromen, die er enthält, auszuziehen, und
- der Saft, der aus dem Pressen des Fruchtfleisches stammt, die Fraktion der aromatischen Komponenten und der abgekühlte Tropfsaft zusammengebracht werden, um den besagten reinen Bananensaft zu erhalten.

2. Verfahren nach Anspruch 1, **dadurch gekennzeichnet, daß** die Abkühlung und die Zerkleinerung des Fruchtfleisches zum Püree durch den Durchgang durch einen Austauscher erhalten werden.

3. Verfahren nach Anspruch 1, **dadurch gekennzeichnet, daß** die Abkühlung und die Zerkleinerung des Fruchtfleisches zum Püree durch ein heftiges Unterziehen desselben einem geringen Druck erhalten werden, derart, um eine erste Extraktion der aromatischen Fraktionen durchzuführen.

4. Verfahren nach irgendeinem der vorgehenden Ansprüche, **dadurch gekennzeichnet, daß** für die Erhitzung des Bananenfruchtfleisches der Dampf benutzt wird, der aus wenigstens einem Teil des von dem Fruchtfleisch hergestellten Tropfsaftes stammt.

5. Verfahren nach irgendeinem der vorgehenden Ansprüche, **dadurch gekennzeichnet, daß** die Erhitzung des Bananenfruchtfleisches in einem durch Dampf gesättigten Raum durchgeführt wird, bis im Innern der Früchte eine Temperatur von 90 bis 95 °C während einer Dauer, die zwischen 3 und 15 Min. liegt, erreicht wird.

6. Verfahren nach irgendeinem der vorgehenden Ansprüche, **dadurch gekennzeichnet, daß** die Bananenschalen nach der Erhitzung heftig einem geringen Druck unterzogen werden, derart, um eine andere Fraktion von Komponenten mit spezifischen Aromen durch Eigenverdunstung, dann Kondensation des Wassers und der Aromen, die sie enthalten, auszuziehen.

7. Verfahren nach irgendeinem der vorgehenden Ansprüche, **dadurch gekennzeichnet, daß**, um die aromatischen Komponenten auszuziehen, das Bananenfruchtfleisch, der Tropfsaft und/oder die Bananenschalen einem Druck unterzogen werden, der zwischen 30 und 500 mbar, vorzugsweise zwischen 50 und 200 mbar, liegt.

8. Verfahren nach irgendeinem der vorgehenden Ansprüche, **dadurch gekennzeichnet, daß** die Kondensation der aromatischen Komponenten unter einer Temperatur von etwa 0°C durchgeführt wird.

9. Verfahren nach irgendeinem der vorgehenden Ansprüche, **dadurch gekennzeichnet, daß** für die enzymatischen Hydrolysereaktion Enzyme mit Pektinaseaktivität und Hemicellulase benutzt werden.

10. Verfahren nach irgendeinem der vorgehenden Ansprüche, **dadurch gekennzeichnet, daß** dem erhaltenen Bananensaft Askorbinsäure hinzugefügt wird, um die Braunfärbung dieses letzteren bei Berührung mit Sauerstoff zu vermeiden.

11. Verfahren nach irgendeinem der vorgehenden Ansprüche, **dadurch gekennzeichnet, daß** der Dampf, der benutzt wird, um das Bananenfruchtfleisch zu erhitzen, kondensiert wird, um die darin enthaltenen aromatischen Komponenten zu sammeln und diese dem hergestellten Bananensaft hinzuzufügen.

## Claims

1. Method for obtaining products derived from bananas, in particular from liquefaction of bananas in order to obtain a pure juice, in which:
- the bananas are peeled, making sure to separate the pulp from the skin without damaging the integrity of the fruits,
- the pulp is heated by vapor and without oxygen, in order to permit the blanching of fruits and the obtaining of an exudation juice,
- the pulp is cooled down,
- the pulp is reduced to puree,
- the banana pulp puree is subjected to an enzymatic hydrolysis reaction, then it is pressed in order to extract the juice from it,
**characterized in that**:
at least part of the exudation juice is subjected to reduced pressure in order to cool it down and extract from it a fraction of aromatic compounds by self-evaporation then condensation of the water and of the flavorings that it contains, and
- the juice obtained from pressing the pulp, the fraction of aromatic compounds and the cooled exudation juice are brought together in order to obtain said pure banana juice.

2. Method according to claim 1, **characterized in that** cooling and reducing the pulp to puree are obtained by passing through an exchanger.

3. Method according to claim 1, **characterized in that** cooling and reducing the pulp to puree are obtained by its abrupt putting under reduced pressure, in order to perform a first extraction of aromatic fractions.

4. Method according to any of the preceding claims, **characterized in that** one uses, for the heating of the banana pulp, the vapor obtained from at least part of the exudation juice produced by said pulp.

5. Method according to any of the preceding claims, **characterized in that** heating the banana pulp is carried out in a vapor-saturated enclosure, to obtain a temperature ranging from 90 to 95°C at the core of the fruits by any appropriate means, for a period between 3 and 15 min.

6. Method according to any of the preceding claims, **characterized in that**, after heating, banana skins are subjected abruptly to reduced pressure in order to extract from them another fraction of compounds having specific flavorings by means of self-evaporation then condensation of the water and of the flavorings that they contain.

7. Method according to any of the preceding claims, **characterized in that** in order to extract the aromatic compounds, the banana pulp, the exudation juice and/or the banana skins are subjected to a pressure between 30 and 500 mbars, preferably between 50 and 200 mbars.

8. Method according to any of the preceding claims, **characterized in that** the condensation of the aromatic compounds is performed at a temperature in the range of 0°C.

9. Method according to any of the preceding claims, **characterized in that** enzymes with pectinase and hemicellulase activities are used for the enzymatic hydrolysis reaction.

10. Method according to any of the preceding claims, **characterized in that** ascorbic acid is added to the obtained banana juice in order to avoid the browning of the latter upon contact with oxygen.

11. Method according to any of the preceding claims, **characterized in that** the vapor used for heating the banana pulp is condensed in order to collect the aromatic compounds it contains and add them to the obtained banana juice.
